# EUROPEAN PATENT APPLICATION

(11) **EP 4 659 931 A1**
(43) Date of publication of application: **10.12.2025**
(21) Application number: 24180043.2
(22) Date of filing: 04.06.2024
(51) Int. Cl.: B29C 43/36, B29C 51/26, B29C 70/34, B29C 70/44, B29D 99/00, B32B 1/08, B64C 1/06, B64C 1/12

(54) **THERMOFORMING COMPOSITE AND SYSTEM FOR CURING OR CONSOLIDATING A THERMOFORMING COMPOSITE**

(71) Applicant: AIRBUS Operations GmbH, 21129 Hamburg (DE)
(72) Inventor: Jörn, Paul, 21129 Hamburg (DE); Schwickert, Jörg, 21129 Hamburg (DE); Finger, Lennart, 21129 Hamburg (DE); Köhler, Filipp, 21129 Hamburg (DE); Haschenburger, Anja, 21680 Stade (DE); Vichniakov, Alexei, 21129 Hamburg (DE); Hinz, Remo, 21129 Hamburg (DE); Jacob, Torben, 21129 Hamburg (DE)
(74) Representative: Schicker, Silvia

(57) **Abstract**

The present disclosure relates to a thermoforming composite, comprising a thermoforming base layer having a first principal surface and a second principal surface opposing the first principle surface; a thermoforming stringer having a base part and an elongated protruding part, wherein the base part is attached to the first principal surface of the thermoforming base layer to enclose an elongated hollow part between the first principal surface of the thermoforming base layer and the protruding part; and an elongated flexible hollow tube core inserted into the elongated hollow part. During consolidation or curing of the thermoforming base layer and the thermoforming stringer, the elongated flexible hollow tube core is pressurizable by a first pressure so that the elongated flexible hollow tube core expands to essentially the same shape as the thermoforming stringer, a second pressure is a uniform pressure exertable to the second principal surface, and the first pressure is essentially equal to a second pressure.

## Description

### Technical Field

The present disclosure generally relates to a thermoforming composite and a system for curing or consolidating a thermoforming composite. In particular, the present disclosure relates to a concept of pressurization of a core inserted into a stringer (e.g. omega stringer for integration of the stringer using hydrostatic pressure (e.g. by using Hydrostatic Metal Membrane Press Technology (HyM²)) on a thermoforming base layer, e.g. a composite skin.

### Background

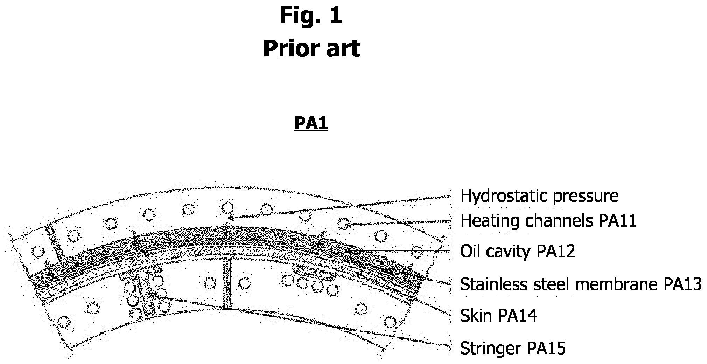

Currently, several endeavours are underway to further mature thermoplastic composites and all its advantages, such a fast (co-)consolidation, thermoforming and welding. Efforts have been made on hydrostatic metal membrane press consolidation, for example in "Hydrostatic membrane consolidation: Skin-stringer panels in 60 minutes", published on 22 March 2022 (available on https://www.compositesworld.com/articles/hydrostatic-membrane-consolidation-skin-stringer-panels-in-60-minutes- ) and shown in Fig. 1.

Fig. 1 shows a system PA1 for hydrostatic membrane consolidation that places pre-consolidated stringers PA15 into a lower mold and then a skin PA14 is laid on top, facing a stainless steel membrane PA13 which acts as an upper tool. In the consolidation process, both tools are heated, by means of heating channels PA11 in both tools, to the melt temperature of the thermoplastic matrix in the skin PA14 and stringers PA15. Then, a press is used to keep the mold closed, while simultaneously building up the oil pressure behind the membrane PA13 with a pump or pressure accumulator so that the membrane PA13 presses on the surface of the preform. During this process, everything is completely remelted and then cooled to form a consolidated, fused and integrated structure.

The HyM² technology is already used for the co-consolidation (thermoplastic) and co-curing (thermoset) of open profile stiffeners/stringers (e.g. T, L, Z, butt-joint stiffener) and the feasibility of solid core concepts in combination with simple and complex (ramps, thickness variations) skins (flat and curved) was already shown.

Moreover, also the feasibility of the integration of omega stringers was shown using a solid core concept with multiple split cores.

However, said concept cannot be scaled to larger parts of several meters or skins with topology e.g. of double curvature. Therefore, another concept is required.

In document US 2010 / 0 007 056 A1, for autoclave consolidation of thermoset panels, an omega polymer tube core is used to allow the integration of omega stiffeners. The pressure balance between the autoclave pressure and the inner pressure within the omega stringer is assured by feeding the omega tubes through the vacuum bagging material to allow autoclave air and pressure to flow into the tube.

However, said concept cannot be readily transferred to hydrostatic (e.g. HyM²) technology, as a solid metal tool is used and there is no pressure in the surrounding environment (pressure is only applied through metal membrane with pressurized cavity behind.

### Summary

Accordingly, there is a need for an implementation of a scheme that avoids one or more of the problems discussed above, or other related problems.

These objects are solved by the present invention as defined by the independent claims. Preferred embodiments are defined by the dependent claims.

Without loss of generality, the present disclosure can be summarized as follows. An omega tube core made of metal, polymer or elastomer is fed through and connected to a pressure balance system to assure equal pressure within the tube core and behind the membrane applied to the skin.

The invention of this disclosure may be used in all applications where a joggled or formed stringer is needed to be consolidated on a ramped skin. Ramped skins or skins including patches are very common in aircraft design, in applications such as a fuselage, doors, flight control surfaces, essentially everywhere where a stiffened skin is usually needed.

In addition, the present disclosure enables the following advantages:
- Reliable quality and robustness due to even pressure application and pressure balance
- Reduced auxiliary material, shorter cycle times and reduced recurring part cost (RC) compared to autoclave consolidation or curing as alternative technology
- Scalability to larger parts and skins with topology
- Integration of omega stringers can achieve weight savings
- Alternatively, omega stringers have to be integrated by welding, bonding or riveting if co-consolidation or co-curing cannot be achieved. This would lead to more RC, process time and lead time.

In a first aspect to better understand the present disclosure, there is provided a thermoforming composite, comprising a thermoforming base layer having a first principal surface and a second principal surface opposing the first principle surface; a thermoforming stringer having a base part and an elongated protruding part, wherein the base part is attached to the first principal surface of the thermoforming base layer to enclose an elongated hollow part between the first principal surface of the thermoforming base layer and the protruding part; and an elongated flexible hollow tube core inserted into the elongated hollow part. During consolidation or curing of the thermoforming base layer and the thermoforming stringer, the elongated flexible hollow tube core is pressurizable by a first pressure so that the elongated flexible hollow tube core expands to essentially the same shape as the thermoforming stringer, a second pressure is a uniform pressure exertable to the second principal surface, and the first pressure is essentially equal to a second pressure.

In a first refinement of the first aspect, the uniform pressure preferably is a hydrostatic pressure. In an implementation variant, the thermoforming base layer preferably is a composite skin. Moreover, the thermoforming stringer preferably is a closed-profile stringer. In turn, the closed-profile stringer preferably is an omega stringer. Moreover, the omega stringer preferably comprises a web part and a flange part. In another implementation variant, the elongated flexible hollow tube core is preferably made of one of a metal, a polymer and an elastomer.

In a second refinement of the first aspect, the elongated flexible hollow tube core preferably has two ends, and at least one of the two ends preferably has a connector that is connected to a connection element.

In a third refinement of the first aspect, the connection element preferably is connected to a pressure balance system configured to ascertain that the first pressure is essentially identical to the second pressure.

In a fourth refinement of the first aspect, the thermoforming composite preferably is a thermoplastic composite, wherein the thermoforming base layer preferably is a thermoplastic base layer, and the thermoforming stringer preferably is a thermoplastic stringer. Alternatively, the thermoforming composite preferably is a thermoset composite, wherein the thermoforming base layer preferably is a thermoset base layer, and the thermoforming stringer preferably is a thermoset stringer.

In a second aspect to better understand the present disclosure, there is provided a system for curing or consolidating a thermoforming composite. The system comprises the thermoforming composite of the first aspect, the first refinement and the second refinement, a lower mold configured to carry the protruding part and the base part of the thermoforming stringer as well as the first principle surface of the thermoforming base layer in portions where no thermoforming stringer is present, and withstand the first pressure, a membrane placed on the second principal surface of the thermoforming base layer; and an upper mold configured to sandwich a pressurization medium between itself and the membrane, and withstand the second pressure, wherein the pressurization medium is pressurizable to the second pressure being the uniform pressure exertable to the second principal surface.

In a third aspect to better understand the present disclosure, there is provided a system for curing or consolidating a thermoforming composite. The system comprises the thermoforming composite of the third refinement of the first aspect, a lower mold configured to carry the protruding part and the base part of the thermoforming stringer as well as the first principle surface of the thermoforming base layer in portions where no thermoforming stringer is present, and withstand the first pressure; a membrane placed on the second principal surface of the thermoforming base layer; an upper mold configured to sandwich a pressurization medium between itself and the membrane, and withstand the second pressure, wherein the pressurization medium is pressurizable to the second pressure being the uniform pressure exertable to the second principal surface; and the pressure balance system a first volume configured to pressure-communicate with the pressurization medium, a second volume connected to the connection element and configured to pressurize a gaseous medium inside the elongated flexible hollow tube core to the first pressure and a flexible membrane configured to allow pressure communication between the first volume and the second volume so that the second pressure becomes essentially equal to the first pressure.

In a first refinement of the second and third aspects, the connection element preferably is fed through an outer wall of the lower mold to the pressure balance system. Moreover, the pressurization medium preferably is made of thermal oil exerting a uniform hydrostatic pressure, and the gaseous medium is preferably one of air and nitrogen. Alternatively, the pressurization medium preferably is made of a gas exerting a uniform static pressure, and the gaseous medium preferably is one of air and nitrogen.

In a second refinement of the second aspect, the thermoforming composite preferably is a thermoplastic composite, wherein the thermoforming base layer preferably is a thermoplastic base layer, and the thermoforming stringer preferably is a thermoplastic stringer. Alternatively, the thermoforming composite preferably is a thermoset composite, wherein the thermoforming base layer preferably is a thermoset base layer, and the thermoforming stringer preferably is a thermoset stringer.

In a fourth aspect of to better understand the present disclosure, there is provided an aircraft component comprising the thermoforming composite of the first aspect and all refinements of the first aspect.

### Brief Description of the Drawings

The embodiments of the technique presented herein are described herein below with reference to the accompanying drawings, in which:
Fig. 1 shows a prior art system for hydrostatic membrane consolidation;
Fig. 2A shows an overview of the thermoforming composite with a deflated elongated flexible hollow tube core according to a first embodiment of the present disclosure;
Fig. 2B shows an overview of the thermoforming composite with an expanded elongated flexible hollow tube core according to the first embodiment of the present disclosure;
Fig. 3A shows a generic overview of a system for curing or consolidating a thermoforming composite according to a second embodiment of the present disclosure; and
Fig. 3B shows an implementation example of the system for curing or consolidating a thermoforming composite according to the second embodiment of the present disclosure.

### Detailed Description

In the following description, for purposes of explanation and not limitation, specific details are set forth in order to provide a thorough understanding of the technique presented herein. It will be apparent to one skilled in the art that the present technique may be practiced in other embodiments that depart from these specific details.

Moreover, those skilled in the art will appreciate that the services, functions and steps explained herein may be implemented using software functioning in conjunction with a programmed microprocessor, or using an Application Specific Integrated Circuit (ASIC), a Digital Signal Processor (DSP) or general purpose computer. It will also be appreciated that while the following embodiments are described in the context of methods and devices, the technique presented herein may also be embodied in a computer program product as well as in a system comprising a computer processor and a memory coupled to the processor, wherein the memory is encoded with one or more programs that execute the services, functions and steps disclosed herein. This applies especially to the aspect of an automated process for manufacturing/forming the thermoforming composite of the present disclosure.

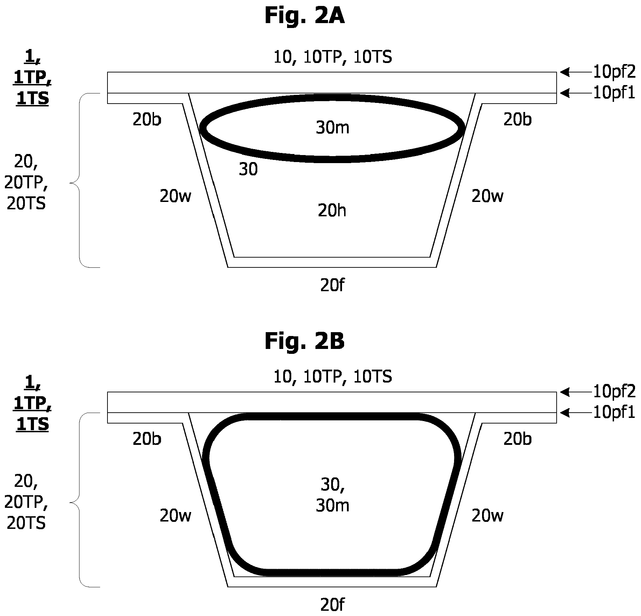

Fig. 2A shows an overview of the thermoforming composite with a deflated elongated flexible hollow tube core according to a first embodiment of the present disclosure, while Fig. 2B shows an overview of the thermoforming composite with an expanded elongated flexible hollow tube core according to the first embodiment of the present disclosure.

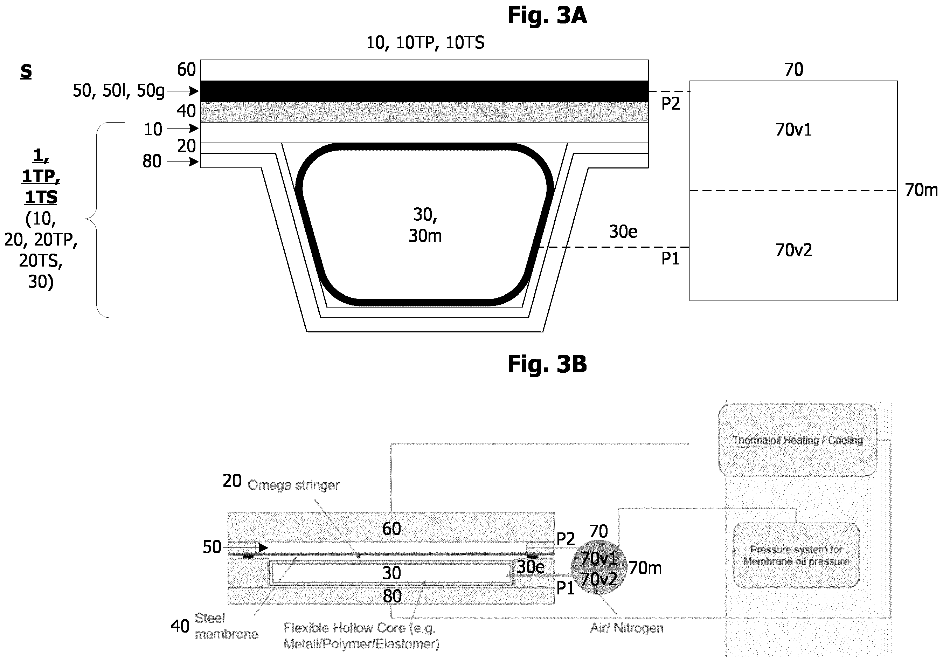

In general terms, as shown in Figs. 2A and 2B, a thermoforming composite 1 comprises a thermoforming base layer 10 having a first principal surface 10pf1 and a second principal surface 10pf2 opposing the first principle surface 10pf1, a thermoforming stringer 20 having a base part 20b and an elongated protruding part 20w, 20f, wherein the base part 20b is attached to the first principal surface 10pf1 of the thermoforming base layer 10 to enclose an elongated hollow part 20h between the first principal surface 10pf1 of the thermoforming base layer 10 and the protruding part 20w, 20f and an elongated flexible hollow tube core 30 inserted into the elongated hollow part 20h. During consolidation or curing of the thermoforming base layer 10 and the thermoforming stringer 20, the elongated flexible hollow tube core 30 is pressurizable by a first pressure P1 (see Figs. 3A and 3B) so that the elongated flexible hollow tube core 30 expands to essentially the same shape as the thermoforming stringer 20, see Fig. 2B (e.g. to support the thermoforming stringer 20 during consolidation or curing), a second pressure P2 is a uniform pressure exertable to the second principal surface 10pf2, and the first pressure P1 is essentially equal to a second pressure P2.

In a variant, the uniform pressure is a uniform hydrostatic pressure P2 exerted e.g. by thermal oil. Alternatively, the uniform pressure is a uniform static (gas) pressure exerted e.g. by pressurized gas.

In a first refinement, the thermoforming base layer 10 is preferably a composite skin. In an implementation variant, the thermoforming stringer 20 preferably is a closed-profile stringer 20. In turn, the closed-profile stringer preferably is an omega stringer (also sometimes dubbed "hat stringer"). Moreover, the omega stringer preferably comprises a web part 20w and a flange part 20f. In another implementation variant, the elongated flexible hollow tube core is preferably made of one of a metal, a polymer and an elastomer e.g. depending on the application, such as thermoplastic (TP) or thermosetting (TS) that both are examples of thermoforming in the sense of the present disclosure.

In a second refinement, the (elongated flexible hollow) tube core 30 preferably has two ends, and at least one of the two ends preferably has a connector that is connected to a connection element 30e. In other words, one end of the tube core 30 preferably is closed (by e.g. welding or achieved during initial production of the tube core), while the other end of the tube core 30 preferably has a connection element 30e. Said connection element 30e is preferably a metallic tube or a flexible tube e.g. made of polymer. Alternatively, both ends of the tube core 30 can be connected to the outside. Still further, within the (omega) stringer 20, the tube core 30 is inserted with nearly the same shape as the (omega) stringer 20.

In a third refinement, the connection element 30e preferably is connected to a pressure balance system 70 (see Figs. 3A and 3B) configured to ascertain that the first pressure P1 is essentially identical to the second pressure P2.

In a fourth refinement, the thermoforming composite 1 preferably is a thermoplastic composite 1TP, wherein the thermoforming base layer 10 preferably is a thermoplastic base layer 10TP, and the thermoforming stringer 20 preferably is a thermoplastic stringer 20TP. Alternatively, the thermoforming composite 1 preferably is a thermoset composite 1TS, wherein the thermoforming base layer 10 preferably is a thermoset base layer 10TS, and the thermoforming stringer 20 preferably is a thermoset stringer 20TS.

Fig. 3A shows a generic overview of a system S for curing or consolidating a thermoforming composite 1 according to a second embodiment of the present disclosure, while Fig. 3B shows an implementation example of the system S for curing or consolidating a thermoforming composite 1 according to the second embodiment of the present disclosure.

In a first variant, the system S for curing or consolidating a thermoforming composite 1 comprises the thermoforming composite as described above.

The system S comprises a lower mold 80 configured to carry the protruding part 20w, 20f and the base part 20b of the thermoforming stringer 20 as well as the first principle surface 10pf1 of the thermoforming base layer 10 in portions where no thermoforming stringer 20 is present, and withstand the first pressure. The lower mold 80 may also be designated as a lower tool 80 that comprises cavities for placing the (omega) stringers 20 and the skin 10 for co-consolidation or co-curing. Moreover, the other end of the tube core 30 may have the connection element 30e which is fed through an outer wall of the lower tool 80 to the outside. Said connection element 30e may be a metallic tube or a flexible tube made of polymer.

The system S further comprises a membrane 40 (e.g. a metal membrane, such as a stainless steel membrane) placed on the second principal surface 10pf2 of the thermoforming base layer 10.

The system S comprises an upper mold 60 configured to sandwich a pressurization medium 50 between itself and the membrane 40, and withstand the second pressure P2, wherein the pressurization medium is pressurizable to the second pressure P2 being the uniform pressure exertable to the second principal surface 10pf2. The upper mold 60 may also be referred to as an upper tooling 60. Notably, the upper mold 60 and/or the lower mold 80 may be heated in order to further or cause a consolidation/curing and/or (re)melting of the thermoforming composite and/or the thermoforming base layer.

In a second variant, the above-described system further comprises the pressure balance system 70. At the end of said connection tube 30e, another connector may be attached which is connected to the pressure balance system 70. Moreover, the connectors of different tubes 30e may be all connected to a manifold, which is connected to the actual pressure balance system 70. Even further still, the pressure balance system 70 can e.g. consist of a tank.

The pressure balance system 70 comprises a first volume 70v1 configured to pressure-communicate with the pressurization medium 50. The first volume 70v1 may be designated as upper volume 70v1 that comprises thermal oil or a gas with is pressurized with the same pressure P2 than the metal membrane 40 in the upper tool 60 (e.g. a one pipe system to have exactly the same pressure).

The pressure balance system 70 comprises a second volume 70v2 connected to the connection element 30e and configured to pressurize a gaseous medium 30m inside the elongated flexible hollow tube cure 30 to the first pressure P1.

The pressure balance system 70 further comprises a flexible membrane 70m configured to allow pressure communication between the first volume 70v1 and the second volume 70v2 so that the second pressure P2 becomes essentially equal to the first pressure P2. In other words, the pressure balance system 70 is divided, by the flexible membrane 70m, into two separate volumes 70v1, 70v2. For instance, the gaseous medium 30m is actively pressurized to the first pressure P1 e.g. by means of a compressor, while the pressurization medium 50 is brought to the second pressure P2 in that the first volume 70v1 passively pressure-communicates with the second volume 70v2.

In a variant, the connection element 30e is preferably fed through an outer wall of the lower mold 80 to the pressure balance system 70.

In another variant, the pressurization medium 50 is preferably a liquid layer 50l made e.g. made of thermal oil exerting, as the second pressure P2, a uniform hydrostatic pressure, and the gaseous medium 30m is one of air and nitrogen (or any other inert gas). In this regard, behind the membrane 40, the consolidation or curing pressure P2 preferably is applied through the thermal oil 50 and transferred to the skin 10 (e.g. the same principle as in a general HyM² process).

Alternatively, the pressurization medium 50 preferably is a gaseous layer 50g made of a gas exerting, as the second pressure P2, a uniform static pressure, and the gaseous medium 30m is one of air and nitrogen. In that case, it is noted that the membrane could also be a piston to allow pressure-communication between the gaseous layer 50g and the gaseous medium 30m; alternatively, in that case, the membrane could also be left away entirely so that there is only one tank volume allowing the gaseous medium 30m (in the inside the elongated flexible hollow tube core 30) and the gaseous layer 50g to be one and the same gaseous medium.

Still further, the pressure P1 of the gaseous medium 30m may transferred to the upper volume 70v1 filled with liquid (or gas) through the flexible membrane 70m (or piston) in between the two volumes 70v1, 70v2, and therefore, also the pressurization layer 50 in the upper tool 60 will be pressurized with the same pressure P2. In this way, throughout the whole process equal pressure P1, P2 between the (omega) tube cores 30 and the metal membrane 40 in the upper tool 60 can be assured leading to proper co-consolidation or co-curing. In other words, the system S can also accommodate pressure irregularities in the thermal oil/gas system throughout the process.

That is, the nitrogen side exerting pressure P1 can be actively pressurized. Technically, the pressurization of the nitrogen side exerting pressure P1 may seem more reasonable. A third option would a pressure regulating system 70 between the two pressure sides.

In another variant, the thermoforming composite 1 preferably is a thermoplastic composite 1TP, wherein the thermoforming base layer 10 preferably is a thermoplastic base layer 10TP, and the thermoforming stringer 20 preferably is a thermoplastic stringer 20TP. Alternatively, the thermoforming composite 1 preferably is a thermoset composite 1TS, wherein the thermoforming base layer 10 preferably is a thermoset base layer 10TS, and the thermoforming stringer 20 preferably is a thermoset stringer 20TS.

Finally, the present disclosure also comprises an aircraft component comprising the thermoforming composite 1 as described above.

It is believed that the advantages of the technique presented herein will be fully understood from the foregoing description, and it will be apparent that various changes may be made in the form, constructions and arrangement of the exemplary aspects thereof without departing from the scope of the present disclosure or without sacrificing all of its advantageous effects. Because the technique presented herein can be varied in many ways, it will be recognized that the present disclosure should be limited only by the scope of the claims that follow.

## Claims

1. A thermoforming composite (1), comprising:
a thermoforming base layer (10) having a first principal surface (10pf1) and a second principal surface (10pf2) opposing the first principle surface;
a thermoforming stringer (20) having a base part (20b) and an elongated protruding part (20w, 20f), wherein the base part is attached to the first principal surface of the thermoforming base layer to enclose an elongated hollow part (20h) between the first principal surface of the thermoforming base layer and the protruding part; and
an elongated flexible hollow tube core (30) inserted into the elongated hollow part,
wherein, during consolidation or curing of the thermoforming base layer and the thermoforming stringer:
- the elongated flexible hollow tube core is pressurizable by a first pressure (P1) so that the elongated flexible hollow tube core expands to essentially the same shape as the thermoforming stringer,
- a second pressure (P2) is a uniform pressure exertable to the second principal surface, and
- the first pressure is essentially equal to a second pressure.

2. The thermoforming composite of claim 1, wherein:
the uniform pressure is a hydrostatic pressure; and/or
the thermoforming base layer is a composite skin; and/or
the thermoforming stringer is a closed-profile stringer, in particular an omega stringer.

3. The thermoforming composite of claim 2, wherein:
the omega stringer comprises a web part (20w) and a flange part (20f).

4. The thermoforming composite of any of claims 1 to 3, wherein:
the elongated flexible hollow tube core is made of one of a metal, a polymer and an elastomer.

5. The thermoforming composite of any of claims 1 to 4, wherein:
the elongated flexible hollow tube core has two ends, and
at least one of the two ends has a connector that is connected to a connection element (30e).

6. The thermoforming composite of claim 5, wherein:
the connection element is connected to a pressure balance system (70) configured to ascertain that the first pressure is essentially identical to the second pressure.

7. The thermoforming composite of any one of claims 1 to 6, wherein
the thermoforming composite is a thermoplastic composite (1TP) or a thermoset composite (1TS), wherein:
- the thermoforming base layer is a thermoplastic base layer (10TP) or a thermoset base layer (10TS), and
- the thermoforming stringer is a thermoplastic stringer (20TP) or a thermoset stringer (20TS).

8. A system (S) for curing or consolidating a thermoforming composite, comprising:
the thermoforming composite of any of claims 1 to 4;
a lower mold (80) configured to:
- carry the protruding part and the base part of the thermoforming stringer as well as the first principle surface of the thermoforming base layer in portions where no thermoforming stringer is present, and
- withstand the first pressure;
a membrane (40) placed on the second principal surface of the thermoforming base layer; and
an upper mold (60) configured to:
- sandwich a pressurization medium (50) between itself and the membrane, and
- withstand the second pressure, wherein the pressurization medium is pressurizable to the second pressure being the uniform pressure exertable to the second principal surface.

9. A system (S) for curing or consolidating a thermoforming composite, comprising:
the thermoforming composite of claim 5;
a lower mold (80) configured to:
- carry the protruding part and the base part of the thermoforming stringer as well as the first principle surface of the thermoforming base layer in portions where no thermoforming stringer is present, and
- withstand the first pressure;
a membrane (40) placed on the second principal surface of the thermoforming base layer;
an upper mold (60) configured to:
- sandwich a pressurization medium (50) between itself and the membrane, and
- withstand the second pressure, wherein the pressurization medium is pressurizable to the second pressure being the uniform pressure exertable to the second principal surface; and
the pressure balance system comprising:
- a first volume (70v1) configured to pressure-communicate with the pressurization medium;
- a second volume (70v2) connected to the connection element and configured to pressurize a gaseous medium (30m) inside the elongated flexible hollow tube core to the first pressure; and
- a flexible membrane (70m) configured to allow pressure communication between the first volume and the second volume so that the second pressure becomes essentially equal to the first pressure.

10. The system of claim 9, wherein:
the connection element is fed through an outer wall of the lower mold to the pressure balance system.

11. The system of claim 9 or 10, wherein:
the pressurization medium is a liquid layer (50l) made of thermal oil exerting a uniform hydrostatic pressure, and
the gaseous medium is one of air and nitrogen.

12. The system of claim 9 or 10, wherein:
the pressurization medium is a gaseous layer (50g) made of a gas exerting a uniform static pressure, and
the gaseous medium is one of air and nitrogen.

13. The system of any one of claims 8 to 12, wherein
the thermoforming composite is a thermoplastic composite (1TP), wherein:
- the thermoforming base layer is a thermoplastic base layer (10TP) or a thermoset base layer (10TS), and
- the thermoforming stringer is a thermoplastic stringer (20TP) or a thermoset stringer (20TS).

14. An aircraft component comprising the thermoforming composite of any of claims 1 to 13.
